# FASCICULE DE BREVET EUROPEEN

(11) **EP 2 128 409 B1**
(45) Date de publication et mention de la délivrance du brevet: **13.07.2011**
(21) Numéro de dépôt: 09159461.4
(22) Date de dépôt: 05.05.2009
(51) Int. Cl.: F02D 35/02, F02P 5/15, F02P 5/152

(54) **Methode de detection du cliquetis dans un moteur à allumage commandé**
Verfahren zur Klopferkennung einer fremdgezündeten Brennkraftmaschine
Knock detection method for a spark ignited internal combustion engine

(30) Priorité: 29.05.2008 FR 0853494
(43) Date de publication de la demande: 02.12.2009
(73) Titulaire: PEUGEOT CITROËN AUTOMOBILES S.A., 78140 Vélizy Villacoublay (FR)
(72) Inventeur: Kubasik, Sébastien, 90500 Beaucourt (FR)
(74) Mandataire: Ménès, Catherine

(56) Documents cités:
- WO-A-01/79678
- WO-A-2004/111416
- DE-A1- 4 015 992
- DE-A1- 4 109 430
- DE-A1- 4 409 103
- DE-A1- 19 605 407
- KR-A- 20070 063 886

## Description

La présente invention a trait à la détection du cliquetis dans les moteurs à allumage commandé. Plus précisément, l'invention concerne une adaptation de la détection du cliquetis selon la qualité du carburant utilisé.

Le cliquetis est un phénomène associé à une combustion anormale dans les moteurs à allumage commandé, lié à l'apparition d'ondes de choc dans la chambre de combustion du moteur. Ce phénomène est typiquement attribué à l'auto-inflammation de particules de carburant imbrûlées qui sont repoussées vers les parois de la chambre de combustion par le souffle du front de flamme généré normalement au niveau de l'arc électrique (étincelle) de la bougie d'allumage. Suite à l'élévation de la température et de la pression, ces particules peuvent s'auto-enflammer et provoquer des ondes de choc susceptibles d'endommager les pistons, les segments ou même les cylindres, et donc provoquer une casse moteur.

Pour une architecture de moteur et un taux de compression donnés, le cliquetis va essentiellement dépendre de l'avance à l'allumage, c'est-à-dire de l'angle de rotation du volant moteur qui sépare l'instant d'étincelle du point mort haut et de la limite d'auto-inflammation du carburant. Cette limite est le plus souvent qualifiée en fonction de l'indice d'octane du carburant sur une échelle de 0 à 100 si le carburant utilisé se comporte du point de vue de ses propriétés d'auto-inflammation comme un heptane (indice de 0) ou un isooctane (indice de 100).

L'avance à l'allumage est adaptée de façon permanente aux conditions de fonctionnement du moteur que l'on peut essentiellement ramenée à la vitesse de rotation de l'arbre moteur (régime moteur) et au couple appliqué sur celui-ci, l'ensemble de ces deux paramètres définissant un point de fonctionnement du moteur. Cette adaptation est effectuée sur tous les véhicules modernes à l'aide du contrôle moteur. En fonction de cartographies définies lors des essais au banc moteur, le contrôle moteur va ainsi proposer une avance à l'allumage donnée selon le point de fonctionnement donné. Cette cartographie est établie en sachant qu'une dégradation de l'avance à l'allumage (décalage en direction du point mort haut) se traduit par une diminution du risque de cliquetis mais aussi par une dégradation des performances du moteur, notamment au niveau de la consommation et de la qualité de la combustion, donc de la pollution générée par cette combustion.

L'emploi de cartographies ne permet pas toutefois de s'affranchir totalement du risque de formation d'un cliquetis qui peut apparaître notamment en raison des dispersions de fabrication qui font qu'un moteur donné n'est jamais totalement identique à un moteur de référence et à l'historique plus ou moins récent des conditions de roulage et des conditions météorologiques dans lesquelles ce roulage a eu lieu. En pratique, la naissance du cliquetis peut donc apparaître comme essentiellement aléatoire aussi les véhicules modernes sont systématiquement pourvus d'équipements propres à détecter l'apparition d'un tel événement et à commander une modification de l'angle d'avance à l'allumage pour y remédier.

De tels équipements comportent typiquement un capteur, par exemple du type accéléromètre pour détecter et quantifier les vibrations générées par le cliquetis, en utilisant par exemple un capteur de type accéléromètre fixé au bloc moteur et sensible aux fréquences de vibrations du cliquetis, et des moyens de calculs propres à analyser les vibrations mesurées. Le cliquetis n'étant qu'une des multiples sources de vibrations qui peuvent affecter un moteur, cette détection est effectuée dans la fenêtre temporelle pendant laquelle cet événement est normalement susceptible de se produire, donc peu après le point mort haut.

Cette méthodologie est satisfaisante si le moteur est bien alimenté avec un carburant conforme à celui préconisé par le constructeur. Si tel n'est pas le cas, et en particulier si le carburant est d'un indice d'octane significativement plus bas que le carburant normalement préconisé, l'événement cliquetis peut se produire avec un certain retard, à l'extrême en dehors de la fenêtre de détection. Même si l'événement se produit bien dans cette fenêtre, il va se produire dans la toute dernière partie de celle-ci, de sorte qu'il devient pratiquement impossible de distinguer l'événement par rapport au bruit de fond, le signal n'étant alors observer que sur une période trop courte.

Or, en règle générale, le réglage de l'avance à l'allumage est effectué en permanence, en augmentant progressivement cette avance tant qu'un cliquetis n'est pas détecté, puis en se rapprochant significativement du point mort haut suite à la détection d'un événement cliquetis et en autorisant à nouveau un retour lent vers des avances à l'allumage plus grandes. Un mauvais positionnement de la fenêtre de détection ne permet pas de détecter un cliquetis naissant, et peut conduire à ne corriger le phénomène qu'une fois le cliquetis installé, autrement dit dans des conditions telles que l'on ne peut totalement écarter le risque d'endommagement du moteur, ou à tout le moins d'une combustion anormalement polluante.
Le document KR20070063886 décrit une méthode de détection d'une combustion anormale dans la chambre de combustion d'un cylindre d'un moteur à combustion interne à allumage commandé, selon laquelle on produit un signal dont l'amplitude dépend d'une grandeur liée à la à la combustion du mélange carburé et on traite les signaux reçus pendant une fenêtre temporelle selon un algorithme comparatif avec un signal de référence représentatif d'une combustion normale dans les mêmes conditions représentatives du fonctionnement du moteur.

Par ailleurs, un autre phénomène de combustion anormale peut se produire dans un moteur, à savoir le phénomène d'auto-allumage, c'est-à-dire l'auto-inflammation non plus de quelques particules de carburant mais d'essentiellement tout le mélange air-carburant, comme il se produit dans un moteur à allumage par compression, auto-inflammation qui se produit avant que l'étincelle de la bougie ne soit produite. Le phénomène d'auto-allumage est d'autant plus dangereux que les organes constitutifs d'un moteur essence, tels que notamment le joint de culasse, les pistons, bielles et vilebrequin, ne sont pas conçus pour résister aux contraintes mécaniques engendrées par un auto-allumage.

Le phénomène d'auto-allumage est souvent lié à la présence de points chauds, dus par exemple à des problèmes au niveau du circuit de refroidissement du moteur ou de l'air en sortie du compresseur pour les moteurs équipés d'un turbocompresseur. En tout état de cause, identifier au plus tôt la survenance d'un tel phénomène est essentiel pour éviter la casse d'un moteur.

La présente invention a ainsi pour but une méthode de détection d'une combustion spontanée ou pré-allumage présentant une grande robustesse et notamment adaptée à des moteurs opérant avec une large gamme de carburants, notamment du fait d'une commercialisation dans de nombreux pays.

A cet effet, l'invention propose une méthode de détection d'une combustion spontanée dans la chambre de combustion d'un cylindre d'un moteur à combustion interne à allumage commandé, selon laquelle on produit un signal dont l'amplitude dépend d'une grandeur liée à la combustion du mélange carburé et on traite les signaux reçus pendant une fenêtre temporelle selon un algorithme comparatif avec un signal de référence représentatif d'une combustion normale dans les mêmes conditions représentatives du fonctionnement du moteur. Selon l'invention, cette fenêtre temporelle admet une borne supérieure choisie avec un retard prédéterminé par rapport à une avance de base à l'allumage, c'est-à-dire une avance à l'allumage calibrée, notamment en fonction du point de fonctionnement du moteur.

Selon l'invention, la durée de la fenêtre d'observation est fixe, comme selon l'art antérieur (du moins en définissant cette fenêtre par une fraction de tour de vilebrequin) mais son début varie et n'est plus fixé arbitrairement par référence au point mort haut. Si l'avance à l'allumage est augmentée, la fin de la fenêtre d'observation sera décalée vers le point mort haut. Par contre si l'avance à l'allumage est dégradée - par exemple du fait de l'utilisation d'un carburant plus détonant, l'instant final de la fenêtre d'observation sera retardé, toutes choses égales par ailleurs.

A noter qu'il est avantageux de ne pas effectuer l'observation sur toute la durée de la fenêtre d'observation, mais de débuter à un instant fixé juste après le point mort haut par exemple à 5° vilebrequin, ceci afin d'éviter toute confusion avec le phénomène de renversement de la course du piston. Autrement dit, en fonction de l'avance à l'allumage, la fenêtre d'observation effective pourra de fait être plus ou moins longue, l'observation débutant effectivement alors que la fenêtre a déjà débuté.

L'invention repose sur la considération de ce que la vitesse de combustion est limitée, et que par conséquent, même si le phénomène de cliquetis est d'autant plus intense que l'avance à l'allumage est grande, ce phénomène ne peut se produire avant un certain temps après l'avance à l'allumage. Si un pic de pression se produit dans la période, correspondant à une combustion anormale, il faut alors considérer que l'allumage s'est produit spontanément avant la production de l'étincelle, et ce pic doit donc être attribué à une combustion spontanée.

La fenêtre d'observation étant ainsi définie, l'identification d'un événement de type combustion spontanée devient relativement binaire dans la mesure où le phénomène de combustion spontanée génère systématiquement un pic de pression relativement élevé, et que par ailleurs, les mesures les plus drastiques doivent être entreprises, comme par exemple l'interruption de l'injection de carburant dans le cylindre concerné pendant quelques tours de vilebrequin.

La fin de la fenêtre de détection des événements de type combustion spontanée peut être avantageusement considérée comme le point de départ de la fenêtre de détection des événements cliquetis. Pour autant, l'invention n'est pas limitée à ce mode de réalisation et la détection du cliquetis peut aussi être effectuée sans référence au positionnement de cette fin de fenêtre, par exemple avec un retard fixe par rapport au point mort haut.

Dans une variante préférée de l'invention, l'avance de base est choisie selon une cartographie dont au moins un des paramètres est une grandeur caractéristique de la qualité du carburant. Autrement dit, on dégrade l'avance à l'allumage dès les premiers tours moteurs si on dispose déjà d'une information sur cette qualité, ou à tout le moins dès que cette information est acquise. Autrement dit, la consigne initiale est essentiellement correcte et les variations imposées par les stratégies d'évitement du cliquetis n'ont qu'un impact du second ordre comme dans le cas d'un moteur opérant avec le carburant de référence utilisé lors des mises au point. Bien entendu, on continue néanmoins à régler en permanence l'avance à l'allumage en tenant compte du point de fonctionnement du moteur (régime, charge), de la richesse du mélange carburé, de la température et éventuellement d'une série de correctifs permettant de tenir compte d'autres paramètres comme par exemple la température extérieure ou l'altitude (pour un meilleur reflet des conditions de température et de pression de l'air d'admission).

Dans une variante, cette grandeur caractéristique de la qualité du carburant est son indice d'octane.

L'étape d'acquisition de la grandeur caractéristique de la qualité du carburant peut être réalisée par de nombreux moyens et comporter par exemple une étape de mesure de l'abaissement de température qui se produit par suite de l'enthalpie de vaporisation d'un film de carburant, comme il est connu par exemple du brevet FR2826405 ou une étape de mesure de la volatilité du carburant (voir WO 2006067204 par exemple), ou encore une étape d'analyse de la composition du carburant par analyse spectroscopique, de préférence dans les régions spectrales du proche infrarouge, de la structure moléculaire des hydrocarbures composant le carburant (voir WO 2006067204). Dans tous ces cas, cités à titre non limitatif, il peut être associé à la mesure une grandeur caractéristique du carburant, comme par exemple son indice d'octane. Notons qu'il est aussi possible que l'information soit directement rentrée par le conducteur, par exemple suite à un plein du réservoir, par exemple au moyen de l'interface des systèmes de téléphonie embarqués.

Dans une autre variante de l'invention, l'étape d'acquisition d'une grandeur caractéristique de la qualité du carburant est réalisée par apprentissage à partir de l'observation même du phénomène de cliquetis, comme décrit par exemple dans le brevet EP138495, c'est-à-dire par comparaison entre les événements cliquetis attendus pour une qualité donnée de carburant et ceux effectivement observés, cette stratégie d'apprentissage supposant une première hypothèse sur la qualité du carburant pour sélectionner une première cartographie de réglage de base de l'avance à l'allumage, le plus simple étant de disposer de moyens pour mémoriser la qualité du carburant estimée juste avant l'arrêt précédent un démarrage.

Cette étape d'acquisition « sans capteur » peut se substituer à une étape d'acquisition basée sur une mesure effective d'une propriété du carburant ou de façon préférée, venir renforcer la robustesse de la méthode en offrant une confirmation du bon fonctionnement du dispositif de mesure (dont on privilégiera à priori les informations par nature plus précises néanmoins que cette estimation à partir de l'observation du cliquetis) ou en cas de défaillance du système de mesure, une valeur par défaut plus fines qu'une valeur conservatrice qui pourrait revenir à, par défaut, considérer que le carburant utilisé est le plus mauvais autorisé par le moteur, et donc à se placer pratiquement systématiquement avec une avance à l'allumage dégradée par rapport à la situation optimale.

Comme indiqué plus haut, le délai entre l'instant d'allumage et la fin de la fenêtre d'observation d'une combustion spontanée peut être associé à la cinétique de combustion du carburant. Pour fixer ce délai, il est donc avantageux de tenir compte du temps nécessaire à la combustion de la plus grande partie du carburant, par exemple de 90% du carburant injecté dans un cylindre, valeur pour laquelle le pic de pression dans le cylindre est normalement observé. Ces valeurs seront par exemple déterminées à partir de mesures de l'énergie dégagée par la combustion, réalisées à partir d'essais sur bancs moteurs.

La palette des carburants commercialisés dans l'ensemble du monde étant très large, ces essais seront par exemple réalisés avec simplement 3 carburants, choisis représentatifs d'une qualité respectivement supérieure, moyenne et faible, pour fixer les idées des RON98, RON91 et RON85, les valeurs de délai étant ensuite intégrées dans cartographies associées. Pour les carburants intermédiaires, une interpolation linéaire pourra être utilisée pour calculer les valeurs de délais au plus juste sans pour autant devoir augmenter le nombre de cartographies, et par conséquent les tailles mémoires.

D'autres détails et caractéristiques avantageuses de l'invention ressortent de la description faite ci-après en référence aux dessins dans lesquels :
- La figure 1 illustre, pour un moteur donné, la répartition des pics de pression en fonction de l'avance à l'allumage ;
- La figure 2 illustre, pour ce même moteur, la relation entre le délai observé pour l'apparition d'un événement cliquetis et l'intensité du pic de pression associé ;
- La figure 3 est un schéma montrant l'intensité des pics de pression observés entre le moment d'allumage et l'instant final de combustion, et la classification de ces pics en fonction de leur positionnement par rapport à l'angle limite de cliquetis.

- La figure 4 montre comment, pour un moteur donné, se répartit le nuage de points obtenus avec un carburant dont l'indice d'octane est très dégradé.
- La figure 5 montre, pour un même moteur, la valeur des avances de base en fonction du régime moteur, calibrées par des essais au banc moteur réalisés à partir de 3 carburants ayant des indices d'octane différents.
- La figure 6 illustre une stratégie mise en oeuvre pour la détection du cliquetis conformément à l'invention.

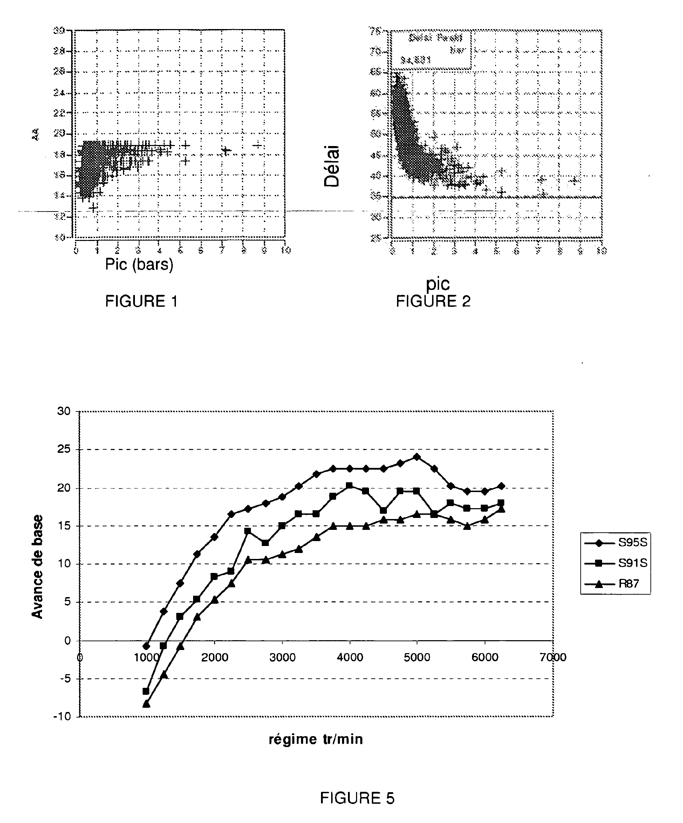

De nombreux essais ont permis de mettre en évidence une relation entre les délais de combustion et le cliquetis. Plus un niveau d'avance appliqué est important, plus le cliquetis est intense, mais le temps écoulé entre ces deux moments atteint une durée minimale. Ceci est illustré à la figure 1 où on a représenté en abscisse l'intensité des pics de pression (en bars) dans la chambre de combustion et en ordonnées, la valeur de l'avance à l'allumage (en degré vilebrequin) pour un moteur donné. Même si clairement le phénomène de cliquetis est un phénomène globalement erratique, il est clair que les pics les plus intenses, par exemple supérieurs 5 bars, ne se rencontrent que pour des valeurs d'avance à l'allumage les plus élevées.

La figure 2 montre par ailleurs la relation entre l'intensité du pic et le moment où celui-ci se produit par rapport à l'instant d'allumage. Dans cette figure, et pour toutes les figures suivantes, le temps est exprimé en degrés vilebrequin pour plus de clarté (et doit donc être rapporté au régime moteur).

Sur cette figure 2, on constate que le délai qui sépare le pic de pression de l'instant d'allumage tend à diminuer avec l'intensité des pics, avec une asymptote qui, dans l'exemple donné est d'environ 35°.

Cette durée minimale peut être interprétée physiquement comme traduisant le fait que la vitesse de combustion n'est pas infinie et que le front de flamme n'atteint la paroi de la chambre qu'après un certain temps. Il est donc avantageux de choisir comme fenêtre d'observation du cliquetis une plage temporelle ne débutant qu'à proximité du temps correspondant à cette durée minimale.

Ce choix est d'autant plus important que la qualité des carburants utilisés peut varier dans une grande mesure, soit en fonction du choix de l'automobiliste lorsque des carburants d'indice d'octane différents lui sont proposés à la pompe, soit tout simplement en fonction de la région où circule le véhicule.

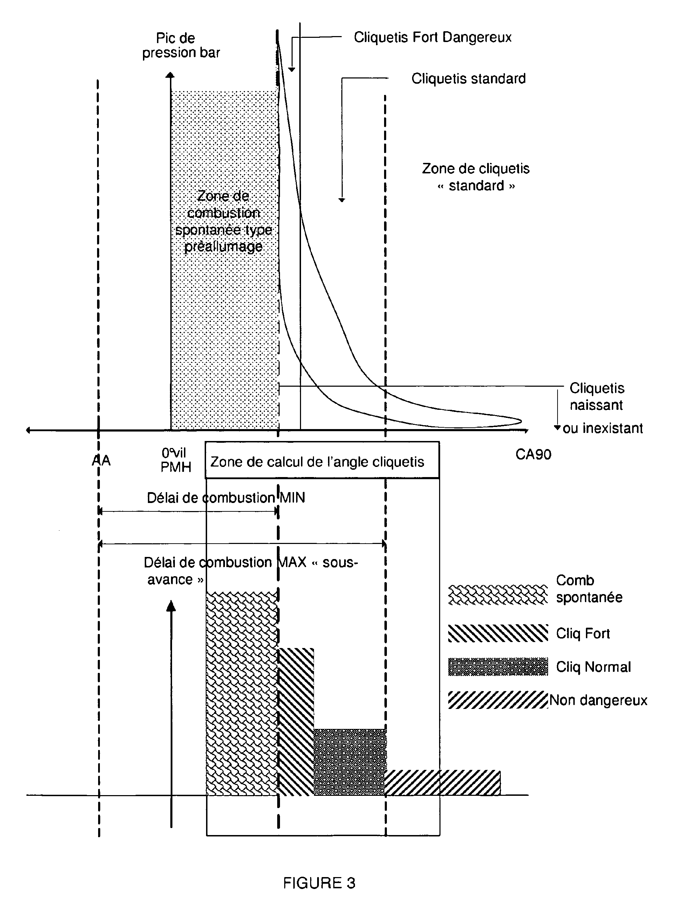

A la figure 3, on a représenté de façon schématique l'intensité des pics de pression éventuellement observé, à partir d'une avance à l'allumage de base et jusqu'à l'instant final de la combustion (défini arbitrairement comme l'instant correspondant expérimentalement à la combustion d'au moins 90% de la charge air-carburant ; la courbe représentant l'allure des enveloppes construites à partir d'essais sur banc moteurs).

Les pics de pression qui peuvent être attribués à des phénomènes de cliquetis se produisent après une durée fixe par rapport à l'instant d'allumage AA, ce qui définit le délai de combustion MIN, qui sépare donc l'instant d'allumage On observe de plus que les pics les plus intenses se produisent immédiatement après la fin de ce délai. Ces pics les plus intenses peuvent être classés comme des événements de cliquetis fort. Plus on s'éloigne de ce délai, plus l'intensité des pics diminue, et avec une première zone où le cliquetis peut être considéré comme normal et une dernière zone dite de cliquetis faible ou naissant où le phénomène n'est plus nécessairement dangereux. Par ailleurs, tout pic de pression observé entre un instant postérieur au point mort haut (0° vilebrequin) et la fin du déliai de combustion MIN n'est pas attribuable à du cliquetis mais peut être classé comme un événement de combustion spontanée.

Cette classification des pics de pression peut être utilisée pour pondérer la modulation de la commande d'avance à l'allumage ou même dans le cas d'une combustion spontanée commander l'arrêt de l'injection de carburant. Ainsi, si un événement cliquetis est considéré comme fort, on pourra décider de dégrader fortement l'avance à l'allumage. Une plus faible dégradation pourra être appliquée pour un cliquetis « normal ». En cas de cliquetis naissant, toute action peut éventuellement être différée, une dégradation de l'avance à l'allumage n'étant appliquée par exemple qu'en cas de répétition du phénomène.

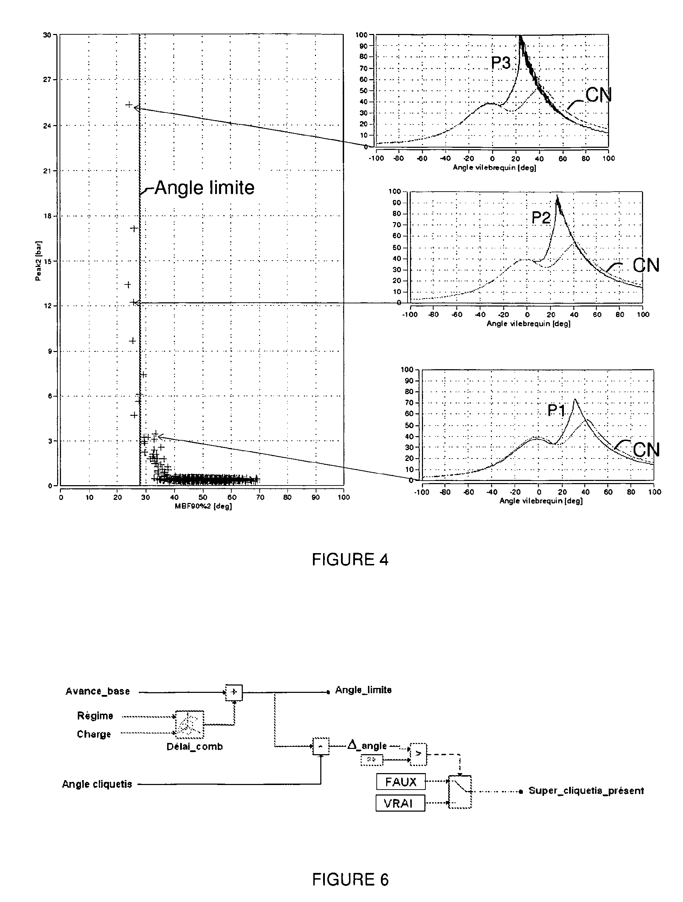

A la figure 4, on a représenté un nuage de pics de pression, à 1500 tours minute pleine charge, dans un système à combustion dégradée, avec un carburant dont l'indice d'octane est très inférieur au carburant de référence pour le moteur considéré. Pour ce système, un angle limite de 28°vilebrequin a été établi, représenté par une droite parallèle à l'axe des ordonnées.

Pour trois des pics de pression observés on a de plus représenté à droite le profil du pic en fonction de l'angle de vilebrequin. Pour ces trois profils, on a de plus fait figuré une allure normale CN d'un cycle hors phénomène de cliquetis, avec une combustion qui s'amorce lentement pour culminer environ à 40° vilebrequin.

En commençant par la courbe inférieure, on note qu'un pic P1 relativement intense peut se produire (un peu plus de 3 bars pour un seuil normalement acceptable de 1,2 bars), avec en sommet de cycle, une cassure. Ce pic est caractéristique d'un cliquetis fort, à la limite du pré-allumage.

Dans les deux courbes supérieures, la combustion s'amorce environ 10° plus tôt, avant l'angle limite comme on peut le voir sur la courbe de droite montrant le nuage de points. De plus, dans les cas des pics P2 et P3 on observe un gradient quasi vertical, avec une intensité supérieures à 10bars par degré vilebrequin. Il ne s'agit plus d'un cliquetis, même fort mais bien d'un début d'un événement de pré-allumage, très dangereux pour le moteur.

Le grand intérêt de cette représentation est que l'avance à l'allumage de base peut être choisie non seulement en fonction du point de fonctionnement du moteur mais également en fonction du carburant utilisé.

En fonction du carburant, et donc de sa plus ou moins grande inflammabilité, on va en effet décider d'allumer le mélange plus ou moins tôt dans le cycle du piston. La figure 5 représente ainsi les valeurs établies pour un moteur donné en fonction du régime moteur, en supposant le moteur à pleine charge. Ainsi, à 2000 tours minute, l'allumage pourra être normalement commandé à environ 13° avant le point mort haut pour un carburant de référence RON 95 (c'est-à-dire un carburant dont l'indice d'octane équivalent est de 95%, correspondant au « super » de base disponible dans les stations service d'Europe de l'Ouest). Si l'on utilise un carburant RON91 dont l'indice d'octane n'est plus que de 91%, l'avance à l'allumage de base doit être réduite à environ 8°. Enfin, pour un carburant RON87 dont l'indice d'octane est de 87%, l'avance à l'allumage de base n'est plus que d'environ 5°. Bien entendu, ces valeurs sont les valeurs de référence telles qu'établies par exemple après essais sur banc moteur, qui ne se substituent pas aux valeurs effectivement utilisées compte tenu de l'observation du phénomène de cliquetis. Simplement, il est avantageux de procéder à priori avec de telles valeurs : si le carburant est un RON95, après chaque détection d'un événement cliquetis, il peut être décidé de revenir à une valeur de par exemple 10°, puis s'autoriser petit à petit à augmenter cette valeur. Dans l'hypothèse d'un carburant de type RON87, on reviendra par contre à un allumage à l'instant du point mort haut. Ceci évite de revenir systématiquement au cas le plus défavorable, dans l'hypothèse du RON87, avec une pollution inutile pendant tout le temps nécessaire pour augmenter doucement l'avance à l'allumage.

Indépendamment de la problématique de régulation du cliquetis, le rapprochement des figures 4 et 5 montre que si on ne tient pas compte de la modification de l'avance de base, des événements cliquetis forts auront toutes les chances d'être considérés comme des événements de pré-allumage, le pic P1 étant ainsi déjà très intense (et en tout état de cause à plus de 1,5 bars). Dans la mesure où le phénomène de pré-allumage est extrêmement dangereux, on ne peut normalement pas attendre quelques nouveaux cycles pour valider une telle classification, de sorte que l'on va par exemple couper l'alimentation dans des cylindres alors que le phénomène n'est en fait qu'un cliquetis fort auquel il pourrait être remédié par une simple dégradation de l'avance à l'allumage, avec au minimum pour conséquence des performances inutilement dégradées. Par contre, en procédant selon l'invention, le classement de l'événement est beaucoup plus sûr.

La figure 6 illustre un exemple de stratégie de détection d'un phénomène de pré-allumage mettant en oeuvre l'invention.

Une avance de base à l'allumage est choisie en tenant compte du régime moteur, et soit en se basant sur une calibration effectuée à pleine charge, soit en pondérant la valeur en tenant compte de la charge effective (par exemple en différenciant une pleine charge ou une demi-charge).

L'avance de base peut par ailleurs avoir été corrigée en tenant compte de la qualité du carburant ou d'autres paramètres comme par exemple la richesse du mélange air/carburant qui, pour un moteur essence à allumage commandé, la richesse est normalement de 1, le mélange correspondant aux conditions stoechiométrique de la réaction de combustion). Pour cette correction, on peut également tenir compte de la température de l'air d'admission et de celle du moteur, donnée par la température du liquide de refroidissement moteur. Par souci de simplification, sur cette figure 6, on a simplement considéré l'avance de base Avance_base, ou plus exactement l'avance de base corrigée, comme une donnée d'entrée de la stratégie.

Par ailleurs, à l'aide par exemple d'une cartographie, on associe au point de fonctionnement du moteur (défini par le couple régime, charge), un délai de combustion Délai_comb, un délai de combustion qui va définir ainsi le premier instant Angle_limite auquel un événement perçu par l'accéléromètre (angle_cliquetis; cet événement étant défini comme angle_limite par son positionnement angulaire par rapport au point mort haut) peut être éventuellement attribué à un événement cliquetis. La différence angulaire Δ_angle entre l'angle de cliquetis perçu et l'angle limite est calculée, et si elle est négative, autrement dit si l'angle cliquetis perçu se produit avant l'angle limite, l'événement perçu est considéré comme un cliquetis naissant.

## Revendications

1. Méthode de détection d'une combustion anormale dans la chambre de combustion d'un cylindre d'un moteur à combustion interne à allumage commandé, selon laquelle on produit un signal dont l'amplitude dépend d'une grandeur liée à la combustion du mélange carburé et on traite les signaux reçus pendant une fenêtre temporelle selon un algorithme comparatif avec un signal de référence représentatif d'une combustion normale dans les mêmes conditions représentatives du fonctionnement du moteur, **caractérisée en ce que** l'on considère comme un événement de combustion spontanée tout signal représentatif d'une augmentation anormale de la pression dans la chambre de combustion, produit pendant une fenêtre temporelle postérieure à l'instant d'allumage et antérieure à un instant choisi avec un retard prédéterminé tenant compte du temps nécessaire à la combustion de la plus grande partie du carburant par rapport à une avance de base à l'allumage dépendant du point de fonctionnement du moteur.

2. Méthode selon la revendication 1, **caractérisé en ce que** le début de la fenêtre est fixé à environ 5° vilebrequin après le point mort haut.

3. Méthode selon la revendication 1 ou la revendication 2, **caractérisée en ce que** l'avance de base à l'allumage est choisie selon une cartographie moteur dont au moins un des paramètres de base ou de correction est une grandeur caractéristique d'au moins un des paramètres suivants : la richesse du mélange carburé, la température de l'air frais admis dans le cylindre, la température du moteur et l'altitude.

4. Méthode de détection selon la revendication 1 ou la revendication 2, **caractérisée en ce que** l'avance de base à l'allumage est choisie selon une cartographie moteur dont au moins un des paramètres de base ou de correction est une grandeur caractéristique de la qualité du carburant.

5. Méthode selon la revendication 4, **caractérisée en ce que** la grandeur caractéristique de la qualité du carburant est représentative de l'indice d'octane du carburant.

6. Méthode selon la revendication 5, **caractérisée en ce que** la grandeur représentative de l'indice d'octane est obtenue par une sonde présente dans la chaine d'alimentation du moteur en carburant.

7. Méthode selon la revendication 5, **caractérisée en ce que** la grandeur représentative de l'indice d'octane est déduite d'une comparaison entre le phénomène de cliquetis observé et le phénomène observé en présence d'un carburant de référence pour un moteur de référence.

8. Méthode selon la revendication 5, **caractérisée en ce** la grandeur représentative de l'indice d'octane est obtenue par une sonde présente dans la chaine d'alimentation du moteur en carburant, cette grandeur étant comparée au phénomène de cliquetis observé en présence d'un carburant de référence présentant un même indice d'octane sur un moteur de référence.

9. Méthode selon l'une quelconque des revendications précédentes, **caractérisée en ce que** le signal dont l'amplitude dépend d'une grandeur liée à la combustion du mélange carburé correspond aux vibrations générées dans la chambre de combustion.

10. Méthode selon l'une quelconque des revendications précédentes, **caractérisée en ce que** la fin de la fenêtre d'observation des événements de type combustion spontanée définit le début de la fenêtre d'observation du cliquetis.

## Claims

1. A method for the detection of an abnormal combustion in the combustion chamber of a cylinder of a spark-ignited internal combustion engine, according to which a signal is produced, the amplitude of which depends on a magnitude linked to the combustion of the carburized mixture, and the signals received during a time slot are processed according to a comparative algorithm with a representative reference signal of a normal combustion under the same representative conditions of the functioning of the engine, **characterized in that** every representative signal of an abnormal increase of the pressure in the combustion chamber is considered as a spontaneous combustion event, produced during a time slot subsequent to the ignition instant and prior to a selected instant with a predetermined delay, taking into account the time necessary for the combustion of the majority of the fuel with respect to a base ignition advance depending on the functioning point of the engine.

2. The method according to Claim 1, **characterized in that** the start of the slot is fixed at approximately 5 crankshaft degrees after the top dead centre.

3. The method according to Claim 1 or Claim 2, **characterized in that** the base ignition advance is selected according to an engine cartography, at least one of the base or correction parameters of which is a characteristic magnitude of at least one of the following parameters: the richness of the carburized mixture, the temperature of the fresh air admitted in the cylinder, the temperature of the engine and the height.

4. A detection method according to Claim 1 or Claim 2, **characterized in that** the base ignition advance is selected according to an engine cartography, at least one of the base or correction parameters of which is a characteristic magnitude of the quality of the fuel.

5. The method according to Claim 4, **characterized in that** the characteristic magnitude of the quality of the fuel is representative of the octane index of the fuel.

6. The method according to Claim 5, **characterized in that** the magnitude representative of the octane index is obtained by a sensor present in the supply chain of the engine with fuel.

7. The method according to Claim 5, **characterized in that** the representative magnitude of the octane index is deduced by a comparison between the observed knocking phenomenon and the phenomenon observed in the presence of a reference fuel for a reference engine.

8. The method according to Claim 5, **characterized in that** the representative magnitude of the octane index is obtained by a sensor present in the supply chain of the engine with fuel, this magnitude being compared with the knocking phenomenon observed in the presence of a reference fuel having the same octane index on a reference engine.

9. The method according to any one of the preceding claims, **characterized in that** the signal, the amplitude of which depends on a magnitude linked to the combustion of the carburized mixture, corresponds to the vibrations generated in the combustion chamber.

10. The method according to any one of the preceding claims, **characterized in that** the end of the observation slot of the events of spontaneous combustion type defines the start of the observation slot of the knocking.

## Patentansprüche

1. Verfahren zum Erfassen einer anormalen Verbrennung in der Brennkammer eines Zylinders eines Verbrennungsmotors mit gesteuerter Zündung, bei dem man ein Signal erzeugt, dessen Amplitude von einer Größe abhängt, die mit der Verbrennung des Kraftstoffgemischs verbunden ist, und man die während eines Zeitfensters empfangenen Signale gemäß einem Algorithmus verarbeitet, der mit einem Bezugsignal vergleicht, das für eine normale Verbrennung unter den gleichen Betriebsbedingungen des Motors repräsentativ ist, **dadurch gekennzeichnet, dass** man als ein spontanes Verbrennungsereignis, das für eine anormale Erhöhung des Drucks in der Brennkammer repräsentativ ist, jedes Signal betrachtet, das während eines Zeitfensters nach dem Augenblick des Zündens und vor einem ausgewählten Augenblick mit einer vorbestimmten Verzögerung, die die Zeit berücksichtigt, die für die Verbrennung des größten Teils des Kraftstoffs im Vergleich zu einem grundlegenden Zündungsvorlauf, der von dem Betriebspunkt des Motors abhängt, erforderlich ist, erzeugt wird.

2. Verfahren nach Anspruch 1, **dadurch gekennzeichnet, dass** der Anfang des Fensters auf etwa 5° Kurbelwelle nach dem oberen Totpunkt festgelegt ist.

3. Verfahren nach Anspruch 1 oder Anspruch 2, **dadurch gekennzeichnet, dass** der grundlegende Zündungsvorlauf gemäß einer Motorkartographie ausgewählt wird, von der mindestens einer der grundlegenden oder Korrekturparameter eine charakteristische Größe mindestens eines der folgenden Parameter ist: die Reichhaltigkeit des Kraftstoffgemischs, die Temperatur der Frischluft, die in den Zylinder eingelassen wird, die Temperatur des Motors und die Seehöhe.

4. Verfahren zum Erfassen nach Anspruch 1 oder 2, **dadurch gekennzeichnet, dass** der grundlegende Zündungsvorlauf gemäß einer Motorkartographie, von der mindestens einer der grundlegenden Parameter oder Korrekturparameter eine charakteristische Größe der Qualität des Kraftstoffs ist, ausgewählt wird.

5. Verfahren nach Anspruch 4, **dadurch gekennzeichnet, dass** die charakteristische Größe der Qualität des Kraftstoffs für die Oktanzahl des Kraftstoffs repräsentativ ist.

6. Verfahren nach Anspruch 5, **dadurch gekennzeichnet, dass** Größe, die für die Oktanzahl repräsentativ ist, durch eine Sonde erzielt wird, die in der Kraftstoffversorgungslinie des Motors vorhanden ist.

7. Verfahren nach Anspruch 5, **dadurch gekennzeichnet, dass** die Größe, die für die Oktanzahl repräsentativ ist, aus einem Vergleich zwischen der beobachteten Klopferscheinung und der Erscheinung abgeleitet wird, die bei Vorhandensein eines Bezugskraftstoffs für einen Bezugsmotor beobachtet wird.

8. Verfahren nach Anspruch 5, **dadurch gekennzeichnet, dass** die Größe, die für die Oktanzahl repräsentativ ist, durch eine Sonde erzielt wird, die in der Kraftstoffversorgungslinie des Motors vorhanden ist, wobei diese Größe mit der bei einem Bezugskraftstoff, der eine gleiche Oktanzahl aufweist, auf einem Bezugsmotor beobachteten Klopferscheinung verglichen wird.

9. Verfahren nach einem der vorhergehenden Ansprüche, **dadurch gekennzeichnet, dass** das Signal, dessen Amplitude von einer Größe abhängt, die mit der Verbrennung des Kraftstoffgemischs verbunden ist, den Schwingungen entspricht, die in der Brennkammer erzeugt werden.

10. Verfahren nach einem der vorhergehenden Ansprüche, **dadurch gekennzeichnet, dass** das Ende des Beobachtungsfensters der Ereignisse des Typs spontane Verbrennung den Anfang des Beobachtungszeitfensters des Klopfens definiert.
